# FASCICULE DE BREVET EUROPEEN

(11) **EP 2 609 404 B1**
(45) Date de publication et mention de la délivrance du brevet: **23.09.2020**
(21) Numéro de dépôt: 11738236.6
(22) Date de dépôt: 02.08.2011
(51) Int. Cl.: G01F 15/06, G01F 15/14, G01F 15/00, G01D 4/00, G01R 11/04

(54) **COMPTEUR DE FLUIDE, EN PARTICULIER D'EAU, EQUIPE D'UN MODULE DE TELE-RELEVE**
STRÖMUNGSMESSER, IM BESONDEREN FÜR WASSER MIT FERNLESEMODUL
FLUID METER, IN PARTICULAR FOR WATER, PROVIDED WITH A REMOTE READING MODULE

(30) Priorité: 23.08.2010 EP 10305906
(43) Date de publication de la demande: 03.07.2013
(73) Titulaire: Itron Global SARL, Liberty Lake WA 99019 (US)
(72) Inventeur: CHAUDY, Alain, Bussières 71960 (FR); CATHERIN, Daniel, F-01570 Manziat (FR); BOUZID, Tarek, F-71000 Mâcon (FR)
(74) Mandataire: Morrall, Jonathan Ian McLachlan
(86) Numéro de dépôt international: PCT/EP2011/063257
(87) Numéro de publication internationale: WO 2012/025340

(56) Documents cités:
- EP-A2- 1 965 175
- CN-Y- 2 655 194
- DE-A1- 10 214 418
- DE-U1- 29 603 056
- GB-A- 1 581 211
- KR-U- 20090 009 151

## Description

L'invention se rapporte à un compteur de fluide, en particulier d'eau, équipé d'un module de télé-relevé disposé sur le capot de ce dernier.

KR 2009 0009151 U décrit un dispositif de lecture de compteur à distance.

DE 102 14 418 A1 décrit un compteur de volume pour mesurer un volume de fluide, en particulier un compteur d'eau.

EP 1 965 175 A2 décrit un compteur d'eau avec des moyens pour enregistrer numériquement les données de lecture et des moyens pour transmettre les données de lecture.

DE 296 03 056 U1 décrit un débitmètre pour fluides.

CN 2 655 194 Y décrit un compteur d'eau à distance sans fil.

Un tel module de télé-relevé est destiné au relevé à distance de la consommation et est installé sur des compteurs éventuellement déjà installés. Pour ce faire, il est appliqué sur la face supérieure du boîtier du totalisateur, afin d'assurer un positionnement précis de l'agencement de lecture du module par rapport à un agencement interne au totalisateur et permettant la détection de la consommation, par exemple le disque indicateur. Cette détection peut être effectuée de façon optique, capacitive, inductive ou autre, par exemple en scrutant le déplacement du disque indicateur.

Il est connu, comme décrit dans le document de brevet EP 1 586 869 ou EP 2 141 465, de réaliser la fixation d'un tel module de télé-relevé sur le capot d'un compteur de fluide par l'intermédiaire d'un élément mâle fileté, de type vis, traversant le module et coopérant avec un insert femelle taraudé surmoulé dans le boîtier ou coiffe du totalisateur du compteur et destiné à recevoir l'élément mâle par vissage.

Dans un tel agencement, un dispositif de plombage à effet visuel peut être inséré à force dans une cavité conformée dans le boîtier du module et entourant la tête de la vis. Ce dispositif de plombage est une pièce ronde de matière plastique souple qui est encastrée dans la cavité, qui recouvre la tête de la vis et qui ne peut être enlevée, par exemple au moyen d'un tournevis, qu'avec sa destruction au moins partielle, ce qui permet de détecter visuellement l'enlèvement du module ou la fraude.

Cet agencement peut également permettre de détecter à distance l'enlèvement du module de télé-relevé en équipant le dispositif de plombage d'un agencement de détection à distance de son positionnement et de son enlèvement.

Ceci étant, un tel agencement laisse totalement visible le module de télé-relevé, le dispositif de plombage recouvrant la tête de la vis et, une fois ce dernier démonté, la tête de vis. Un fraudeur peut donc facilement être incité à démonter le module par enlèvement de ce dispositif de plombage et de la vis ou même à arracher le module de télé-relevé.

Pour résoudre ce problème, l'invention propose d'équiper un tel compteur d'un capot disposé sur le boîtier du module de télé-relevé et comportant une paroi de recouvrement de sa paroi frontale.

Il est par ailleurs décrit dans le document de brevet WO 2009/121723 un module de télé-relevé destiné au relevé à distance de la consommation d'un compteur et comprenant un boîtier avec une paroi frontale et une paroi latérale. Ce module comprend également un capot de protection du rayonnement solaire spécifique, disposé sur le boîtier du module de télé-relevé et comportant au moins une paroi de recouvrement de ladite paroi frontale, ce capot pouvant être clippé sur le boîtier du module de télé-relevé. Ce capot peut comporter également un rebord périphérique recouvrant au moins partiellement la paroi latérale du module de télé-relevé.

Spécifiquement destiné à la protection au rayonnement solaire, ce rebord périphérique recouvre de préférence partiellement la paroi latérale du module de télé-relevé et ce capot comporte des moyens de circulation d'air entre le module de télé-relevé et le capot et, de préférence, des orifices d'aération dans sa paroi de recouvrement.

Bien que concernant également un capot de recouvrement du module de télé-relevé, l'objet de l'invention est tout autre. Cet objet est de cacher totalement le module de télé-relevé, afin qu'une personne non avertie ne sache pas directement qu'un module est disposé sur le totalisateur du compteur et surtout ne voit pas ses moyens de fixation. Equipé de ce capot, le compteur se présente comme d'une seule pièce, non démontable.

Pour ce faire, l'invention propose un compteur de fluide, en particulier d'eau, comportant un totalisateur pourvu d'un index de consommation, un boîtier dite coiffe recouvrant le totalisateur et un module de télé-relevé fixé sur la face frontale de ladite coiffe, destiné au relevé à distance de la consommation et contenant dans un boîtier des moyens de lecture et des moyens de transmission, ce boîtier comprenant une paroi frontale et une paroi latérale, ce module étant couvert par un capot, disposé sur le boîtier du module de télé-relevé et comportant au moins une paroi de recouvrement de ladite paroi frontale, compteur caractérisé en ce que ledit capot est en matériau opaque et recouvre également toute la dite paroi latérale du module et est solidarisé à ladite coiffe du totalisateur.

Selon un mode de réalisation préféré, dont ledit module de télé-relevé comporte une cheminée proéminente contenant son antenne, ledit capot comporte un orifice de passage de ladite cheminée.

De préférence, ledit capot comportant une fenêtre de visualisation de l'index de consommation dudit totalisateur.

Ledit capot peut comporter également une fenêtre de visualisation de données imprimées sur le boîtier du module.

Avantageusement, ladite coiffe du totalisateur, le boîtier dudit module de télé-relevé et ledit capot sont de couleur identique.

De préférence, ledit capot est solidarisé à ladite coiffe du totalisateur par clippage.

Ledit capot est avantageusement solidarisé à ladite coiffe du totalisateur au moyen d'au moins deux clips coopérant avec deux orifices correspondants agencés dans ladite coiffe du totalisateur.

Ces clips coopèrent de préférence avec lesdits deux orifices correspondants par déplacement perpendiculaire à ladite paroi frontale.

Lesdits clips présentent par ailleurs avantageusement des zones de rupture assurant leur détachement et, de préférence, lesdits clips peuvent être détachés par un choc perpendiculaire à ladite paroi frontale, par exemple à l'aide d'un marteau.

L'invention est décrite ci-après plus en détail à l'aide de figures ne représentant qu'un mode de réalisation préférée de l'invention.
La figure 1 est une vue en perspective d'un compteur conforme à l'invention.
La figure 2 est une vue en perspective d'un compteur conforme à l'invention, avant montage d'un capot.
La figure 3 est une vue en perspective d'un compteur conforme à l'invention, lors du montage d'un capot.
Les figures 4 à 7 sont des vues en coupe verticale de détail.

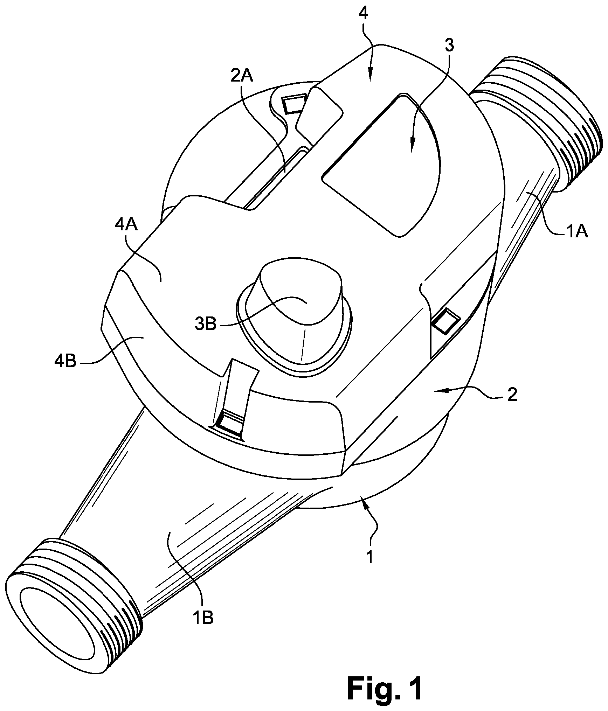

La figure 1 représente un compteur de fluide, en particulier d'eau, conforme à l'invention.

Ce compteur comporte une bâche 1 avec une conduite d'entrée d'eau 1A et une conduite de sortie d'eau 1B, contenant une chambre de mesure, un totalisateur recouvert d'un capot dite coiffe 2 et pourvu d'un index 2A de consommation et un module de télé-relevé 3 fixé sur la face frontale de ladite coiffe et destiné au relevé à distance de la consommation et contenant dans un boîtier des moyens de lecture et des moyens de transmission, ce boîtier comprenant une paroi frontale et une paroi latérale.

Ce module 3, invisible sur la figure 1, est couvert par un capot 4, en matériau opaque, disposé sur le boîtier du module de télé-relevé, comportant une paroi de recouvrement 4A de la paroi frontale du module, recouvrant également toute la paroi latérale du module par sa paroi latérale 4B et solidarisé à la coiffe 2 du totalisateur.

Ainsi équipé, le capot 4 cache quasi-totalement le module de télé-relevé, afin qu'une personne non avertie ne sache pas directement qu'un module est disposé sur le totalisateur du compteur et surtout ne voit pas ses moyens de fixation.

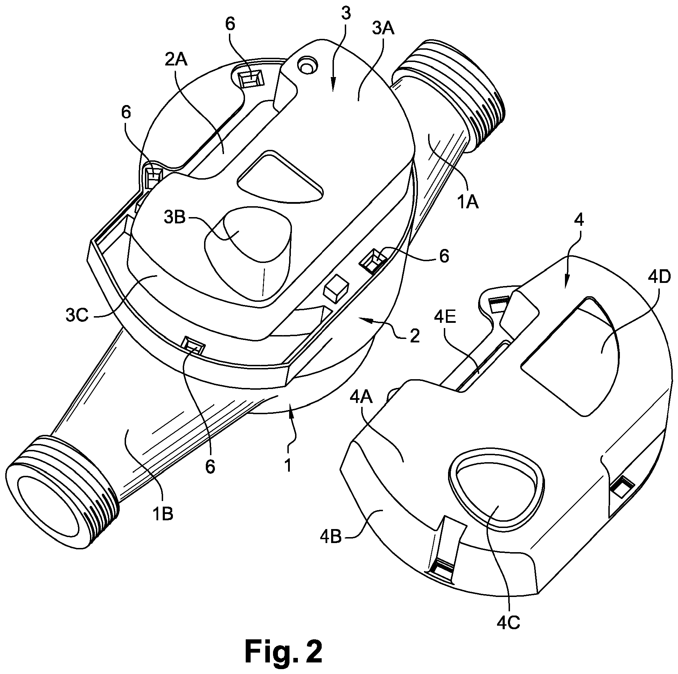

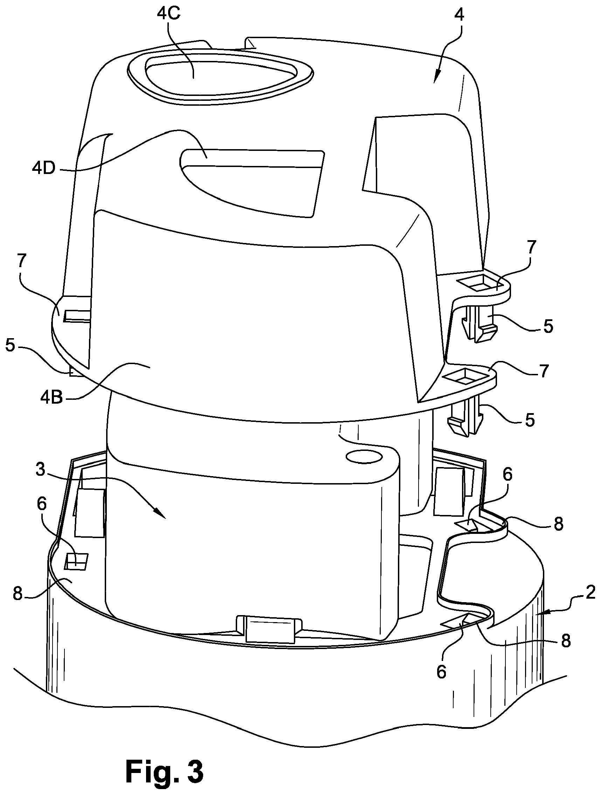

Les figures 2 et 3 représentent ce même compteur avec le capot non monté ou en cours de montage.

Le boîtier du module de télé-relevé 3 présente sur sa paroi frontale 3A des données imprimées spécifiques au module, par exemple un code-barres, et une cheminée 3B proéminente contenant l'antenne du module.

Afin d'assurer une bonne transmission de cette antenne, le capot 4 comporte un orifice 4C de passage de cette cheminée 3B et, de préférence, il comporte également une fenêtre 4D de visualisation des données imprimées sur le boîtier du module.

Selon ce mode de réalisation, le capot 4 recouvrant l'index de consommation 2A du totaliseur, le capot 4 comporte également une fenêtre 4E de visualisation de cet index.

Le module 3 ou plutôt son boîtier étant donc visible au travers de l'orifice 4C de passage de la cheminée 3B et au travers de la fenêtre 4D de visualisation des données imprimées, la coiffe 2 du totalisateur, le boîtier du module de télé-relevé 3 et le capot 4 sont avantageusement de couleur identique, afin d'assurer au maximum la fonction recherchée de cache de ce module. En d'autres termes, le compteur équipé du capot comme illustré sur la figure 1 semble à l'œil non averti constitué d'une seule unité montée sur la bâche 1.

Le capot 4 est de préférence solidarisé à la coiffe 2 du totalisateur par clippage.

Pour ce faire, il est avantageusement solidarisé à la coiffe 2 du totalisateur au moyen d'au moins deux clips 5 coopérant avec deux orifices 6 correspondants agencés dans la coiffe 2 du totalisateur. Dans l'exemple représenté, ces clips 5 et ces orifices 6 sont au nombre de quatre.

Ces clips sont disposés sur des rebords 7 conformés sur le capot 4 et destinés à être reçus dans des emplacements d'encastrement 8 conformées sur la face frontale de la coiffe 2, afin d'assurer une interface correcte.

Selon l'exemple représenté, ces clips 5 coopèrent avec les quatre orifices 6 correspondants par déplacement perpendiculaire à la paroi frontale 3A.

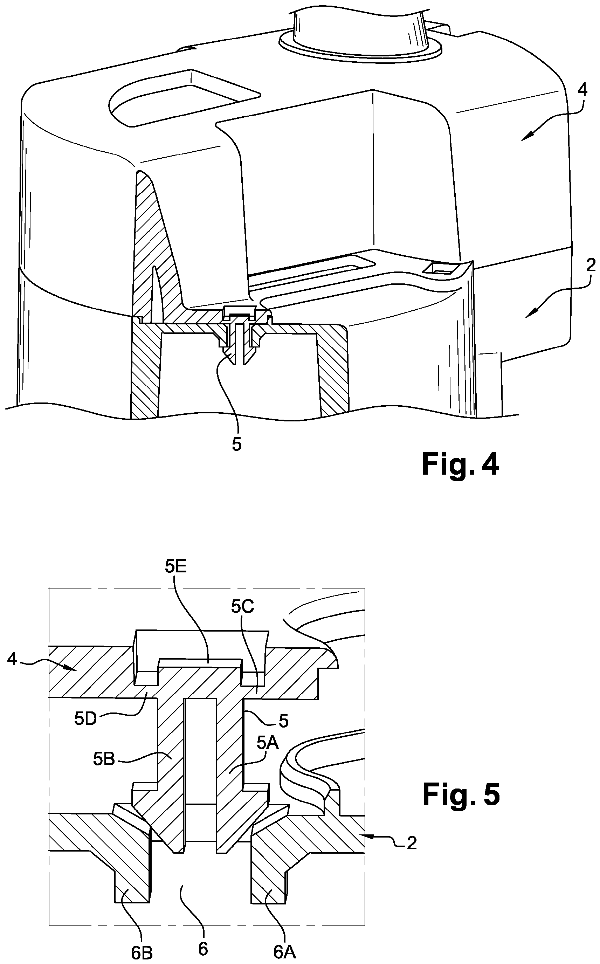

Le démontage du capot 4 étant nécessaire en cas d'intervention par un installateur, ces clips 5 assurent également le plombage contre la fraude, de ce capot. Comme visibles sur les figures 4 à 7, ils présentent pour ce faire des zones de rupture assurant leur détachement et, de préférence, ils peuvent être détachés par un choc perpendiculaire à la paroi frontale 3A du module, par exemple à l'aide d'un marteau.

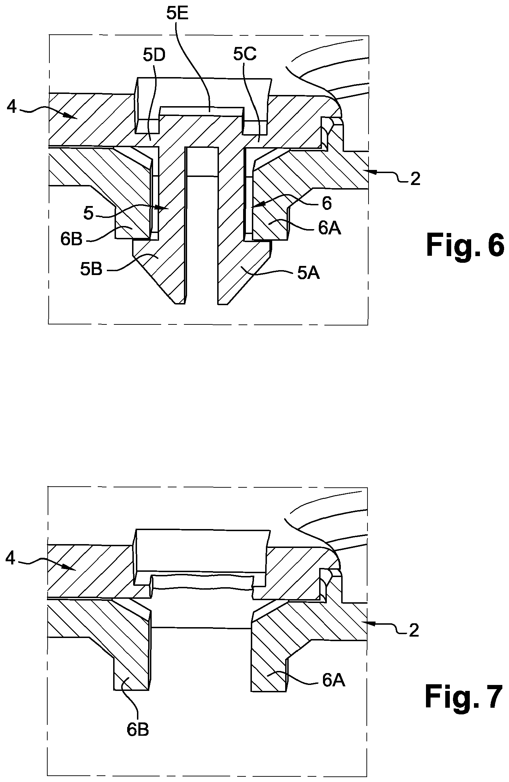

Comme bien visible sur les figures 5 et 6, ces clips 5 comportent un agencement d'encliquetage à double harpon 5A, 5B destiné à venir s'accrocher sur une nervure 6A, 6B derrière la coiffe 2, une fois introduit dans les orifices 6.

A la base de cet agencement à double harpon 5A, 5B, ce dernier est relié au capot 4 par des parois amincies 5C, 5D formant des zones de rupture autour d'une base 5E formée dans le capot 4 et reliant les harpons. Si nécessaire, l'installateur donne un choc, par exemple à l'aide d'un marteau, sur cette base 5E des harpons et cisaille les zones de rupture, ce qui entraîne le détachement de l'agencement à double harpon 5A, 5B et sa tombée à l'intérieur de la coiffe 2, entre cette dernière et le totalisateur. Le capot 4 peut alors être enlevé et si besoin remplacé. Ces clips 5 assurent donc également le plombage contre la fraude, en cas d'une telle opération par un fraudeur.

## Revendications

1. Compteur de fluide, en particulier d'eau, comportant un totalisateur pourvu d'un index de consommation, un boîtier dite coiffe (2) recouvrant le totalisateur et un module de télé-relevé (3) fixé sur la face frontale de ladite coiffe, destiné au relevé à distance de la consommation et contenant dans un boîtier des moyens de lecture et des moyens de transmission, ce boîtier comprenant une paroi frontale (3A) et une paroi latérale (3C), ce module étant couvert par un capot (4), disposé sur le boîtier du module de télé-relevé et comportant au moins une paroi de recouvrement (4A) de ladite paroi frontale (3A), compteur **caractérisé en ce que** ledit capot (4) est en matériau opaque et recouvre également toute la dite paroi latérale (3C) du module et est solidarisé à ladite coiffe (2) du totalisateur.

2. Compteur selon la revendication 1, dont ledit module de télé-relevé (3) comporte une cheminée proéminente (3B) contenant son antenne, **caractérisé en ce que** ledit capot (4) comporte un orifice (4C) de passage de ladite cheminée.

3. Compteur selon l'une des revendications précédentes, **caractérisé en ce que** ledit capot (4) comporte une fenêtre (4E) de visualisation de l'index de consommation dudit totalisateur

4. Compteur selon l'une des revendications précédentes, **caractérisé en ce que** ledit capot (4) comporte une fenêtre (4D) de visualisation de données imprimées sur le boîtier du module (3).

5. Compteur selon l'une des revendications précédentes, **caractérisé en ce que** ladite coiffe (2) du totalisateur, le boîtier dudit module de télé-relevé (3) et ledit capot (4) sont de couleur identique.

6. Compteur selon l'une des revendications précédentes, **caractérisé en ce que** ledit capot (4) est solidarisé à ladite coiffe (2) du totalisateur par clippage.

7. Compteur selon la revendication précédente, **caractérisé en ce que** ledit capot (4) est solidarisé à ladite coiffe (2) du totalisateur au moyen d'au moins deux clips (5) coopérant avec deux orifices (6) correspondants agencés dans ladite coiffe (2) du totalisateur.

8. Compteur selon la revendication précédente, **caractérisé en ce que** lesdits clips (5) sont configurés pour coopérer avec lesdits deux orifices (6) correspondants par déplacement perpendiculaire à ladite paroi frontale (3A).

9. Compteur selon la revendication 7 ou 8, **caractérisé en ce que** lesdits clips (5) présentent des zones de rupture (5C, 5D) assurant leur détachement.

10. Compteur selon la revendication précédente, **caractérisé en ce que** lesdits clips (5) sont configurés pour être détachés par un choc perpendiculaire à ladite paroi frontale (3A), par exemple à l'aide d'un marteau.

## Patentansprüche

1. Strömungsmesser, im Besonderen für Wasser, der ein Zählwerk umfasst, das mit einem Verbrauchsindex, einem Gehäuse (2), Haube genannt, das das Zählwerk abdeckt, und einem Fernlesemodul (3), das auf der Frontfläche der Haube befestigt ist, das zum Fernerheben des Verbrauchs bestimmt ist und in einem Gehäuse Lesemittel und Übertragungsmittel enthält, versehen ist, wobei dieses Gehäuse eine Frontwand (3A) und eine Seitenwand (3C) umfasst, wobei dieses Modul von einer Kappe (4) abgedeckt ist, die auf dem Gehäuse des Fernlesemoduls angeordnet ist und mindestens eine Abdeckungswand (4A) der Frontwand (3A) umfasst, Strömungsmesser **dadurch gekennzeichnet, dass** die Kappe (4) aus opakem Material besteht und auch die gesamte Seitenwand (3C) des Moduls abdeckt und mit der Haube (2) des Zählwerks fest verbunden ist.

2. Strömungsmesser nach Anspruch 1, dessen Fernlesemodul (3) einen herausragenden Schacht (3B) umfasst, der seine Antenne enthält, **dadurch gekennzeichnet, dass** die Kappe (4) eine Durchgangsöffnung (4C) des Schachts umfasst.

3. Strömungsmesser nach einem der vorstehenden Ansprüche, **dadurch gekennzeichnet, dass** die Kappe (4) ein Sichtfenster (4E) des Verbrauchsindex des Zählwerks umfasst.

4. Strömungsmesser nach einem der vorstehenden Ansprüche, **dadurch gekennzeichnet, dass** die Kappe (4) ein Sichtfenster (4D) von Daten, die auf das Gehäuse des Moduls (3) gedruckt sind, umfasst.

5. Strömungsmesser nach einem der vorstehenden Ansprüche, **dadurch gekennzeichnet, dass** die Haube (2) des Zählwerks, das Gehäuse des Fernlesemoduls (3) und die Kappe (4) identische Farbe aufweisen.

6. Strömungsmesser nach einem der vorstehenden Ansprüche, **dadurch gekennzeichnet, dass** die Kappe (4) fest mit der Haube (2) des Zählwerks durch Clipsen verbunden ist.

7. Strömungsmesser nach dem vorstehenden Anspruch, **dadurch gekennzeichnet, dass** die Kappe (4) mit der Haube (2) des Zählwerks mittels mindestens zwei Clips (5) fest verbunden ist, die mit zwei entsprechenden Öffnungen (6), die in der Haube (2) des Zählwerks angelegt sind, zusammenwirken.

8. Strömungsmesser nach dem vorstehenden Anspruch, **dadurch gekennzeichnet, dass** die Clips (5) ausgelegt sind, um mit den zwei entsprechenden Öffnungen (6) durch Verlagerung senkrecht zu der Frontwand (3A) zusammenzuwirken.

9. Strömungsmesser nach Anspruch 7 oder 8, **dadurch gekennzeichnet, dass** die Clips (5) Bruchzonen (5C, 5D), die ihr Ablösen sicherstellen, aufweisen.

10. Strömungsmesser nach dem vorstehenden Anspruch, **dadurch gekennzeichnet, dass** die Clips (5) dazu ausgelegt sind, durch einen senkrechten Stoß an der Frontwand (3A), zum Beispiel mit Hilfe eines Hammers, abgelöst zu werden.

## Claims

1. Fluid meter, in particular for water, including a totalizer provided with a consumption indicator, a housing referred to as a cap (2) covering the totalizer, and a remote reading module (3) fixed to the front face of said cap, enabling remote reading of consumption and containing reading means and transmission means in a housing, said housing including a front wall (3A) and a side wall (3C), said module being covered by a cover (4) arranged on the housing of the remote reading module and including at least one wall (4A) for covering said front wall (3A), which meter is **characterized in that** said cover (4) is made of an opaque material and also covers all of said side wall (3C) of the module and is fastened to said cap (2) of the totalizer.

2. Meter according to Claim 1, wherein said remote reading module (3) includes a protruding chimney (3B) containing its antenna, **characterized in that** said cover (4) includes an orifice (4C) through which said chimney passes.

3. Meter according to either of the preceding claims, **characterized in that** said cover (4) includes a window (4E) for viewing the consumption indicator of said totalizer.

4. Meter according to any one of the preceding claims, **characterized in that** said cover (4) includes a window (4D) for viewing data printed on the housing of the module (3).

5. Meter according to any one of the preceding claims, **characterized in that** said cap (2) of the totalizer, the housing of said remote reading module (3) and said cover (4) are exactly the same color.

6. Meter according to any one of the preceding claims, **characterized in that** said cover (4) is clipped onto said cap (2) of the totalizer.

7. Meter according to the preceding claim, **characterized in that** said cover (4) is fastened to said cap (2) of the totalizer by means of at least two clips (5) cooperating with two corresponding orifices (6) in said cap (2) of the totalizer.

8. Meter according to the preceding claim, **characterized in that** said clips (5) are configured to cooperate with said two corresponding orifices (6) by movement perpendicular to said front wall (3A).

9. Meter according to Claim 7 or 8, **characterized in that** said clips (5) have rupture areas (5C, 5D) for detaching them.

10. Meter according to the preceding claim, **characterized in that** said clips (5) are configured to be detached by an impact perpendicular to said front wall (3A), for example by means of a hammer.
